(19) Europäisches Patentamt
European Patent Office
Office européen des brevets

(11) EP 3 474 058 A1

(12) EUROPEAN PATENT APPLICATION
published in accordance with Art. 153(4) EPC

(43) Date of publication:
24.04.2019 Bulletin 2019/17

(51) Int Cl.:
*G02B 13/02* (2006.01)

(21) Application number: 17815416.7

(22) Date of filing: 20.06.2017

(86) International application number:
PCT/JP2017/022756

(87) International publication number:
WO 2017/221948 (28.12.2017 Gazette 2017/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 21.06.2016 JP 2016122603

(71) Applicant: Nittoh Inc.
Suwa-shi, Nagano 392-0131 (JP)

(72) Inventor: SAWAMOTO, Akira
Suwa-shi
Nagano 392-0021 (JP)

(74) Representative: Körber, Martin Hans
Mitscherlich PartmbB
Patent- und Rechtsanwälte
Sonnenstrasse 33
80331 München (DE)

(54) **IMAGE-CAPTURING OPTICAL SYSTEM AND IMAGE-CAPTURING DEVICE**

(57) An optical system (10) consists of, in order from an object side (11) toward an image plane (5a), a first lens group (G1) with overall positive refractive power, a second lens group (G2) with overall negative refractive power, an aperture stop (St), and a third lens group (G3) with overall positive refractive power. The third lens group (G3) includes a stop-side lens (L7) with positive refractive power that is disposed closest to the object side (11) and an image plane-side lens (L10) with negative refractive power that is disposed closest to the image plane side (12), and a distance dS between a surface on the object side of the lens (L7) and the aperture stop (St) and a distance dI between the surface on the object side of the lens (L7) and the image plane (5a) satisfy the condition (1) below.

$$0.02 < dS/dI < 0.3 \ ... \ (1)$$

Fig. 1

EP 3 474 058 A1

**Description**

Technical Field

The present invention relates to an optical system for image capture that can be favorably used in an image capture apparatus, such as a camera.

Background Art

Japanese Laid-open Patent Publication No. 2002-107616 (Document 1) discloses an inner-focus lens that is composed of 8 or 9 lenses in three groups that are positive, negative, and positive in order from the object side, where the second lens group integrally moves during focusing and where, by satisfying a predetermined lens configuration and predetermined conditional expressions, it is possible to achieve a compact lens with favorable aberration correction, which is favorable for a camera with a large film size. In more detail, the disclosed lens system is produced by aligning a first lens group, which is fixed, is positive, and in order from the object side is composed of two positive lenses, a negative lens, and a positive lens, a second lens group, which is negative, is composed of a negative lens and a positive lens, and integrally moves during focusing, and a third lens group, which is fixed, is positive, and is composed of a positive lens, a negative lens, and a positive lens.

Summary of Invention

Large image capture elements are starting to be used in image capture apparatuses, such as cameras, resulting in demand for an image-capture lens system (optical system) that has a large image circle so as to be compatible with a large image capture element. In an optical system with a large image circle, especially an optical system with a large angle of view, there is a tendency for the lens size to become large and the back focus to be relatively short. For this reason, there is demand for the realization of an optical system with a large image circle that has a simple configuration, and a compact size.

One aspect of the present invention is an optical system that consists of, in order from an object side toward an image plane, a first lens group with overall positive refractive power, a second lens group with overall negative refractive power, an aperture stop, and a third lens group with overall positive refractive power. The third lens group includes a stop-side lens with positive refractive power that is disposed closest to (most toward) the object side and an image plane-side lens with negative refractive power that is disposed closest to (most toward) the image plane side, and a distance dS between a surface on the object side of the stop-side lens and the aperture stop and a distance dI between the surface of the stop-side lens and the image plane satisfy the condition (1) below.

$$0.02 < dS/dI < 0.3 \ldots (1)$$

This optical system as a whole has a power arrangement of a positive-negative-positive that is almost telephoto type and makes it easy to achieve a comparatively long back focus. On the other hand, as disclosed in the document 1 above, this type of system has a tendency for the lens diameter on the object side to increase compared to the lens diameter on the image plane side. For this reason, when the lens diameter on the image plane side is increased to increase the image circle, the lens diameter on the object side will become even larger, making it difficult to design a compact optical system. When the lens diameter on the object side is reduced, the angle of view tends to become smaller, making it difficult to obtain an optical system that is bright and is wide angle for a telephoto lens.

In the present optical system, by disposing a lens with negative refractive power closest to the image plane side, an image circle that is larger compared to the lens diameter on the image plane side is obtained. On the other hand, when a lens with negative refractive power is disposed closest to the image plane side, the incident angle of off-axis light inputted to the image plane, that is, to the image capture element becomes too large (that is, the incident angle of light rays is too steep), resulting in a tendency for the amount of peripheral light to be insufficient and/or for aberration to be insufficiently corrected. For this reason, in the present optical system, the lens (stop-side lens) with positive refractive power that is closest to (most toward) the object side (that is, closest to the aperture stop (hereinafter sometimes referred to simply as the "stop")) in the third lens group is disposed in the range to the aperture stop so as to satisfy the condition (1) given above, thereby suppressing the divergence of light rays, and in particular the off-axis light, from the aperture stop with respect to the optical axis. By doing so, it is possible to reduce (flatten) the angle of light rays incident on the image plane, thereby avoiding the problem described above.

In addition, since it is possible to suppress the spreading of the light flux on the image plane side from the aperture stop and to suppress increases in the lens diameter on the image plane side relative to the image circle, it is possible to suppress increases in the diameter of the lens on the object side relative to the lens diameter on the image plane side. Also, by bringing the surface of the lens, which has positive refractive power and is suited to gathering light at the closest position to the object side in the third lens group G3 (that is, the closest surface to the stop in the third lens group), closer to the aperture stop, it becomes easier for the third lens group to take in peripheral light and possible to suppress a fall in the angle of view. Accordingly, it is possible to provide an optical system that has a large angle of view and a small lens diameter at the part of the optical system closest to the object side.

When the upper limit of the condition (1) is exceeded, the closest surface to the stop in the third lens group (the object side (stop side) surface of the stop side lens) becomes too far from the aperture stop, which makes it difficult to suppress increases in the diameter of the image plane-side lens and/or difficult to obtain a compact optical system. When the ration is below the lower limit of the condition (1), since the surface on the object side of the stop-side lens becomes too close to the aperture stop, the ratio of light ray flux (light flux) above and below the stop may vary, which makes aberration correction difficult. The lower limit in the condition (1) may be 0.15, which makes aberration correction easier. The upper limit may be 0.25, which makes it possible to further suppress increases in the diameter of the image plane-side lens.

The optical system may be an inner focus type where during focusing, the first lens group, the aperture stop, and the third lens group are fixed with respect to the image plane and the second lens group moves relative to the image plane.

A composite focal length f2 of the second lens group and a focal length fs of the stop-side lens may satisfy the condition (2) below.

$$0.1 < |f2/fs| < 0.8 \ ... \ (2)$$

When the upper limit of the condition (2) is exceeded, the refractive power of the stop-side lens becomes too large relative to the refractive power of the second lens group that performs focusing, which makes aberration correction difficult. On the other hand, when the ratio is below the lower limit of the condition (2), the refractive power of the stop-side lens is too weak, which makes it difficult to control the angle of light rays on the image plane. The lower limit of the condition (2) may be 0.3, which makes it easier to control the angle of light rays on the image plane. The upper limit may be 0.6, which makes aberration correction easier.

A focal length f1 of the first lens group, the focal length f2 of the second lens group, and a back focus BF may satisfy the conditions (3) and (4) below. The back focus BF in this specification is the length of the back focus of the optical system (lens system) when focused at infinity.

$$-10 < f2/BF < -1.4 \ ... \ (3)$$

$$-1.5 < f2/f1 < -0.7 \ ... \ (4)$$

When the upper limits of the conditions (3) and (4) are exceeded, the power of the second lens group is too strong, so that aberration is excessively corrected. When the ratios below the lower limits of the conditions (3) and (4), the refractive power of the second lens group is too weak, so that the focusing effect is weak, the movement distance increases, and the lens length increases. The lower limit of the condition (3) may be -4 and the lower limit of the condition (4) may be -1.3. This further suppresses increases in the lens length. The lower limit of the condition (4) may be -0.8, which can prevent aberration correction from becoming excessive.

The third lens group may be composed of the stop-side lens, a lens with positive refractive power, a biconcave negative lens, and the image plane-side lens disposed in order from the object side. A radius of curvature RLN2 of a surface on the image plane side of the biconcave negative lens and a back focus BF may satisfy the condition (5) below.

$$0.05 < BF/RLN2 < 0.5 \ ... \ (5)$$

By disposing two lenses with negative refractive power on the image plane side of the third lens group, it is possible to provide the optical system with a large image circle relative to the back focus BF. By making the surface on the image plane side of the negative lens that is the second lens from the image plane, a surface that is concave on the image plane side, it is possible to prevent the angle of light rays incident on the image plane from becoming too large, which makes it possible to form sharper images. When the upper limit in the condition (5) is exceeded, the absolute value of the curvature increases, the refractive power becomes too strong, and it is difficult to achieve balance for the correction of aberration. The back focus BF also becomes too long. When the ratio is below the lower limit of the condition (5), the refractive power becomes too weak, making aberration correction difficult. The back focus BF also becomes too short. The upper limit of the condition (5) may be 0.4 which makes it easier to achieve balance for the correction of aberration.

The image plane-side lens may be a negative meniscus lens that is convex on the image plane side, and a radius of curvature RLL1 of a surface on the object side of the image plane-side lens and the radius of curvature RLN2 may satisfy the condition (6) below. It is possible to provide a compact optical system with a large image circle.

$$-1.0 < (RLL1 + RLN2)/(RLL1 - RLN2) < -0.1 \ldots (6)$$

When the upper limit of the condition (6) is exceeded, the refractive power of the combination of facing surfaces of the final two lenses on the image plane side is too large, resulting in the back focus BF being too short. On the other hand, when the ratio is below the lower limit of the condition (6), the refractive power of the combination of facing surfaces is insufficient, resulting in the back focus BF being too long. There is also an increase in lens diameter and/or lens length. The upper limit of the condition (6) may be -0.5, which also makes it possible to prevent the back focus BF from becoming too short.

With this optical system, it is possible to reduce the lens diameter on the object side relative to the lens diameter on the image plane side as a system based on a telephoto type. As one example, an effective diameter De1 of a surface on the object side of a lens most toward (closest to) the object side in the first lens group and an effective diameter DeLL2 of a surface on the image plane side of the image plane-side lens in the third lens group that is most toward (closest to) the image plane side may satisfy the condition (7) below.

$$0.9 < De1/DeLL2 < 1.0 \ldots (7)$$

In this optical system, it is possible to make the overall length LA of the optical system short as a telephoto type, and the overall length LA and the back focus BF may satisfy the condition (8) below.

$$1.5 < LA/BF < 5.0 \ldots (8)$$

The lower limit of the condition (8) may be 2.0 and the upper limit may be 4.0.

In addition, it is possible to reduce an effective diameter De1 of the surface of the object side of the lens most toward the object side in the first lens group relative to the back focus BF as a telephoto type, and the ratio may satisfy the condition (9) below.

$$0.8 < De1/BF < 2.0 \ldots (9)$$

The upper limit of the condition (9) may be 1.6.

Another aspect of the present invention is an image capture apparatus including the optical system described above and an image capture element disposed on the image plane side of the optical system. The optical system may be an interchangeable lens and the image capture apparatus may include a digital camera, a video camera, a TV camera and an action camera. Since it is possible to provide the optical system with a large-aperture and compact size, it is possible to miniaturize the image capture apparatus.

Brief Description of Drawings

FIG. 1 depicts an overview of an image capture apparatus including an optical system for image capture.
FIG. 2 depicts lens data of the optical system shown in FIG. 1.
FIG. 3 depicts focal lengths of the optical system shown in FIG. 1.
FIG. 4 depicts various aberrations of the optical system shown in FIG. 1.

FIG. 5 depicts transverse aberrations of the optical system shown in FIG. 1.

FIG. 6 depicts an overview of an image capture apparatus including a different optical system for image capture.

FIG. 7 depicts lens data of the optical system shown in FIG. 6.

FIG. 8 depicts focal lengths of the optical system shown in FIG. 6.

FIG. 9 depicts various aberrations of the optical system shown in FIG. 6.

FIG. 10 depicts transverse aberrations of the optical system shown in FIG. 6.

Detail description

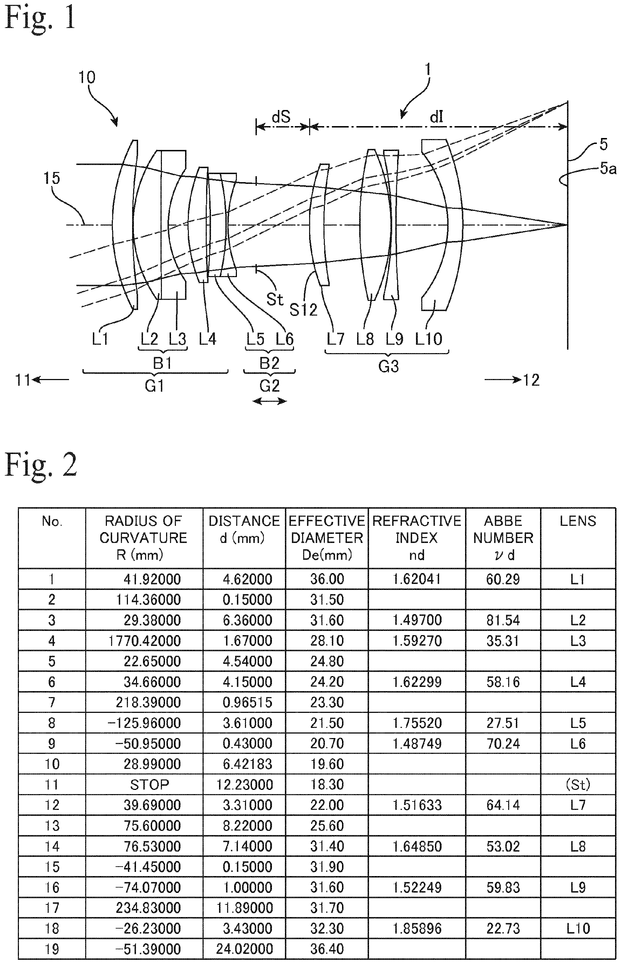

FIG. 1 depicts an example of an image capture apparatus (image capture device, camera, camera apparatus) with an optical system for image capture. The camera 1 includes an optical system (image capture optical system, image-forming optical system, lens system) 10 and an image capture element (image capture device) 5 disposed on the image plane side (or "image capture side" or "image forming side") 12 of the optical system 10 that forms an image plane 5a. The optical system 10 consists of, in order from the object side 11 toward the image plane 5a, a first lens group G1 with overall positive refractive power, a second lens group G2 with overall negative refractive power, an aperture stop St, and a third lens group G3 with overall positive refractive power, and is an inner focus-type image capture optical system 10 where during focusing, the first lens group G1, the aperture stop St, and the third lens group G3 are fixed relative to the image plane 5a, and the second lens group G2 moves relative to the image plane 5a.

The first lens group G1 has a four-lenses configuration and is composed of a meniscus lens L1 with positive refractive power (hereinafter refractive power may be simply indicated as "positive" or "negative") that is convex on the object side 11, a positive meniscus lens L2 that is convex on the object side 11, a negative meniscus lens L3 that is convex on the object side 11, and a positive meniscus lens L4 that is convex on the object side 11, such lenses being disposed along the optical axis 15 in that order from the object side 11. A cemented lens B1 with negative refractive power is constructed by the positive meniscus lens L2 and the negative meniscus lens L3. That is, the first lens group G1 has a positive-positive-negative-positive or positive-negative-positive power arrangement.

The second lens group G2 has a two-lenses configuration and is composed of a positive meniscus lens L5 that is convex on the image plane side 12 and a biconcave negative lens L6, which are disposed along the optical axis 15 in that order from the object side 11. The lenses L5 and L6 construct a cemented lens B2 with negative refractive power. The cemented lens B2 moves back and forth along the optical axis 15 for focusing purposes.

The third lens group G3 that is disposed on the image plane side 12 on the other side of the aperture stop St to the second lens group G2 has a four-lenses configuration and is composed of a positive meniscus lens (stop-side lens) L7 that is convex on the object side 11, a biconvex positive lens L8, a biconcave negative lens L9, and a negative meniscus lens (image plane-side lens) L10 that is convex on the image plane side 12 and disposed at closes to the image plane side 12, such lenses being disposed along the optical axis 15 in that order from the object side 11. That is, the third lens group G3 has a positive-positive-negative-negative power arrangement. Accordingly, the optical system 10 as a whole consists of ten lenses including two cemented lenses. With respect to the aperture stop St, an arrangement of the object side 11 has a positive-negative-positive-negative (in lens units, positive-positive-negative-positive-positive-negative) power arrangement and an arrangement of the image plane side 12 has a positive-positive-negative-negative power arrangement, and the system 10 has, as a whole, a so-called "plus-lead" telephoto combination of powers but has the power arrangement that produces an overall compact construction.

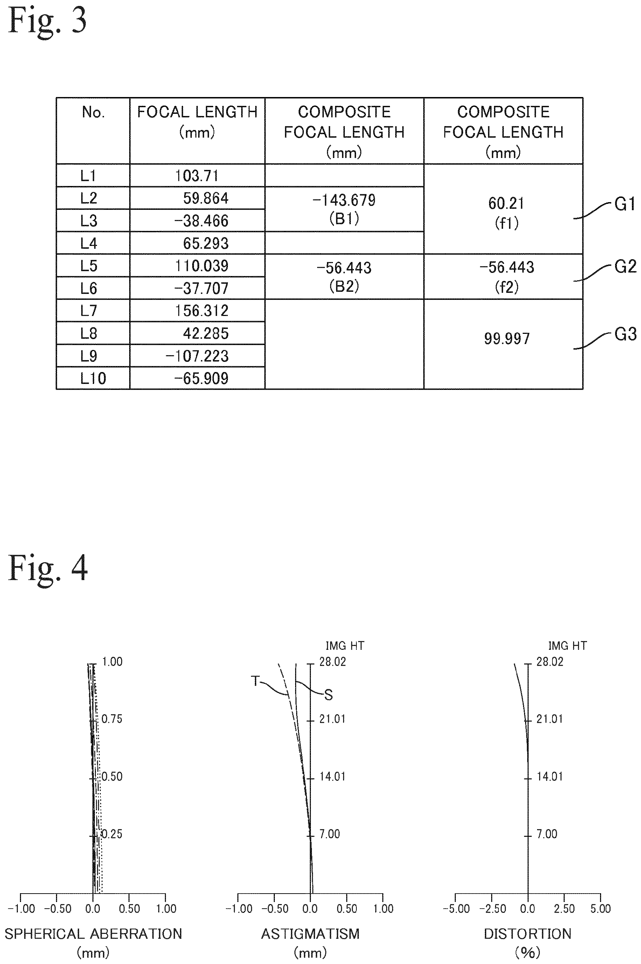

FIG. 2 depicts data on the respective lenses that construct the optical system 10. "Radius of Curvature (R)" indicates the radius of curvature (in mm) of the respective surfaces of the respective lenses disposed in order from the object side 11, "Distance d" indicates the distance (in mm) between the respective lens surfaces, "Effective diameter De" indicates the effective diameter (in mm) of each lens surface, "Refractive index nd" indicates the refractive index (d line) of each lens, and "Abbe number vd" indicates the Abbe number (d line) of each lens. Note that "d19" indicates the distance (back focus "BF") between the optical system 10 and the image capture device 5. FIG. 3 depicts the focal length (in mm) of each lens, the composite focal length (in mm) of each cemented lens B1 and B2, and the composite focal lengths (in mm) of the respective lens groups G1 to G3. This is also the case for the lens data given later. Note that focal lengths and the like in the present embodiment are found at the d line.

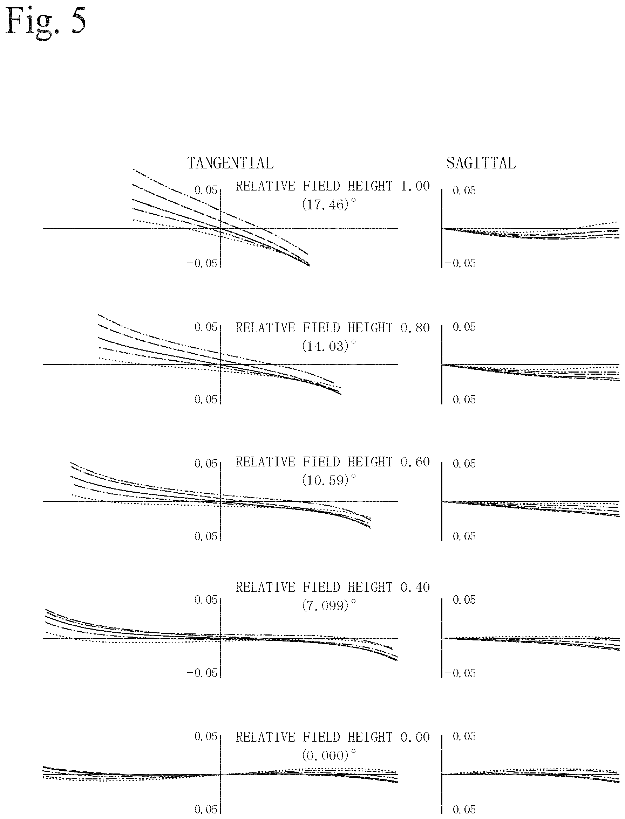

FIG. 4 depicts spherical aberration, astigmatism, and distortion of the optical system 10. Spherical aberration is depicted for a wavelength of 435.8340nm (dot-dot-dash line), a wavelength of 486.1330nm (long dash line), a wavelength of 546.0740nm (solid line), a wavelength of 587.5620nm (dot-dash line), and a wavelength of 656.2730nm (short dash line). Astigmatism is depicted for tangential rays T and sagittal rays S. In FIG. 5, chromatic aberrations of magnification (transverse aberrations) of the optical system 10 are separately depicted for tangential rays and sagittal rays at the respective wavelengths given above. This also applies to the aberration diagrams given later.

Numerical values indicating the main performance of the optical system 10 are given below.

Overall composite focal length (f): 89.94mm

F number: 3.26
Maximum angle of view (half-field): 17.46 degrees
Image circle: φ56 mm
Back focus (BF): 24.02 mm
Overall lens length (LA): 80.29 mm

The values of the optical system 10 for the conditions (1) to (9) are given below, with all of the conditions being satisfied. Note that the values in quotation marks indicate the parameters corresponding to the optical system 10 in the present embodiment.

Condition (1) (dS/dl, "d11/(d12 to d19)"): 0.207
Condition (2) (|f2/fs|, "|f2/fL71|"): 0.361
Condition (3) (f2/BF): -2.35
Condition (4) (f2/f1): -0.937
Condition (5) (BF/RLN2, "BF/R17"): 0.102
Condition (6) ((RLL1+RLN2)/(RLL1-RLN2), "(R18+R17)/(R18-R17)"): -0.799
Condition (7) (De1/DeLL2, "De1/De19"): 0.99
Condition (8) (LA/BF): 3.34
Condition (9) (De1/BF): 1.50

The image capture optical system 10 has a positive-negative-positive power arrangement in which the first lens group G1 that has positive refractive power, the second lens group G2 that has negative refractive power, the stop St, and the third lens group G3 that has positive refractive power are disposed in that order from the object side 11, and is an inner focus-type optical system where the second lens group G2 moves during focal length adjustment (i.e., focusing). Therefore, the optical system 10 is almost like a telephoto type (inverse retrofocus type) optical system. In a typical telephoto-type optical system, it is possible to increase the focal length, but the angle of view is small, so that when the angle of view is increased, the effective diameter of the object side 11 becomes increasing. In the typical telephoto-type optical system, if the effective diameter of the lens on the image plane side 12 is simply increased to realize an image circle as large as φ56mm as described above for compatibility with a large-sized image capture element 5, this will increase the size of the optical system, resulting in a heavy lens system with a large overall length.

In this optical system 10, by disposing the lens L10 with negative refractive power closest to the image plane side 12, an image circle of a large size relative to the effective diameter of the image plane lens L10 can be obtained. In addition, to satisfy the condition (1), the object-side surface (the surface that is closest to the stop out of the third lens group G3) S12 of the lens (stop-side lens) L7 with positive refractive power is disposed at a closest position of the third lens group G3 to the object side 11, that is, closest to the aperture stop St. This configuration suppresses the divergence of the light rays from the aperture stop St, and in particular the off-axis light, with respect to the optical axis 15. Therefore, the incident angle of off-axis light that is inputted onto the image plane 5a, that is, the image capture device 5 via the lens L10 that has negative refractive power on the image plane side 12, is flattened (i.e., reduced), resulting in a sufficient amount of peripheral light being gathered and the ability to sufficiently perform aberration correction. Accordingly, it is possible to use a negative lens L10 at the position closest to the image plane side 12, and by doing so, it is possible to suppress increases in the diameter De19 (DeLL 2) of the lens L10 closest to the image plane side 12 relative to the size of the image circle. This means that it is possible to suppress increases in the diameter De1 of the lens L1 on the object side 11 relative to the diameter De19 of the lens L10 on the image plane side 12.

Also, by bringing the lens L7, which has positive refractive power and is suited to gathering light at the closest position to the object side 11 in the third lens group G3, closer to the aperture stop St, it becomes easier for the third lens group G3 to take in peripheral light and possible to suppress a fall in the angle of view. Accordingly, it is possible to provide the optical system 10 where the diameter De1 of the lens L1 that is closest to the object side 11 in the optical system 10 is small and the angle of view is large. In this example, it is possible to provide an optical system 10 where the effective diameter De1 of the lens L1 closest to (most toward) the object side 11 is smaller than the effective diameter De19 of the lens L10 closest to (most toward) the image plane side 12.

In addition, the relationship between the refractive power (focal length f2) of the second lens group G2, which performs inner focusing and faces the lens L7 with the aperture stop St in between, and the refractive power (focal length fs) of the lens L7 is set so as to satisfy the condition (2), which means that the stop-side lens L7 of the third lens group G3 has the refractive power for favorably correcting aberration and appropriately controlling the angle of the light rays with respect to the image plane 5a.

The refractive power (focal length f2) of the second lens group G2 is set to satisfy the conditions (3) and (4) with respect to the back focus BF and the refractive power (focal length f1) of the first lens group, thereby realizing an optical system 10 that can sufficiently perform aberration correction at the second lens group G2, can achieve a sufficient focusing performance, and has a shorter overall length LA. Also, although the second lens group G2 is driven by a motor during focusing in the optical system 10, by setting the power of the second lens group G2 within a range that satisfies the conditions (3) and (4), the second lens group G2 is constructed of two lenses with the lenses L5 and L6, or more specifically only the cemented lens B2, which is lightweight and reduces the load of the motor of the optical system 10.

The third lens group G3 is constructed, in order from the object side 11, of lenses L7 and L8 with positive refractive power and lenses L9 and L10 with negative refractive power, and by constructing the image plane side 12 from the two lenses L9 and L10 with negative refractive power, it is possible to suppress the lens diameter of the image plane side 12 and to form a large image circle. In particular, by using a biconcave negative lens as the lens L9 second closest to the image plane side 12 and setting the radius of curvature R17 of the surface of the image plane side 12 in the range of the condition (5), it is possible to prevent the angle of light rays incident on the image plane 5a from becoming too large, so that clearer images can be formed. With this configuration, the back focus BF does not become too long.

The image plane side lens L10 closest to the image plane side is a negative meniscus lens that is convex on the image plane side 12, and a combination of facing surfaces that satisfy the condition (6) is formed by the final two lenses L10 and L9 on the image plane side 12. Sufficient negative refractive power is provided by these surfaces, the number of surfaces required for aberration correction is also provided, and it is also possible to suppress increases in curvature of field due to the Petzval sum becoming too large.

Accordingly, in this optical system 10, that is based on a telephoto type, it is possible to reduce the diameter De1 of the lens L1 on the object side 11 relative to the diameter De19 of the lens L10 on the image plane side 12, so that in the present embodiment, the optical system 10 where the lens L1 closest to the object side 11 is smaller than the lens L10 closest to the image plane side 12 is realized. In addition, there is provided the lens system (optical system) 10 that is compact as a whole and has a short overall length LA, achieves a comparatively long back focus BF in spite of the image circle diameter being as large as cp56mm, and has a lens L1 closest to the object side 11 that is small compared to the back focus BF. Further, the optical system 10 has a large angle of view as the system based on a telephoto type, that is, a half- angle of 17.46 degrees, is bright with an F number of 3.26, and is favorable as an interchangeable lens or the like.

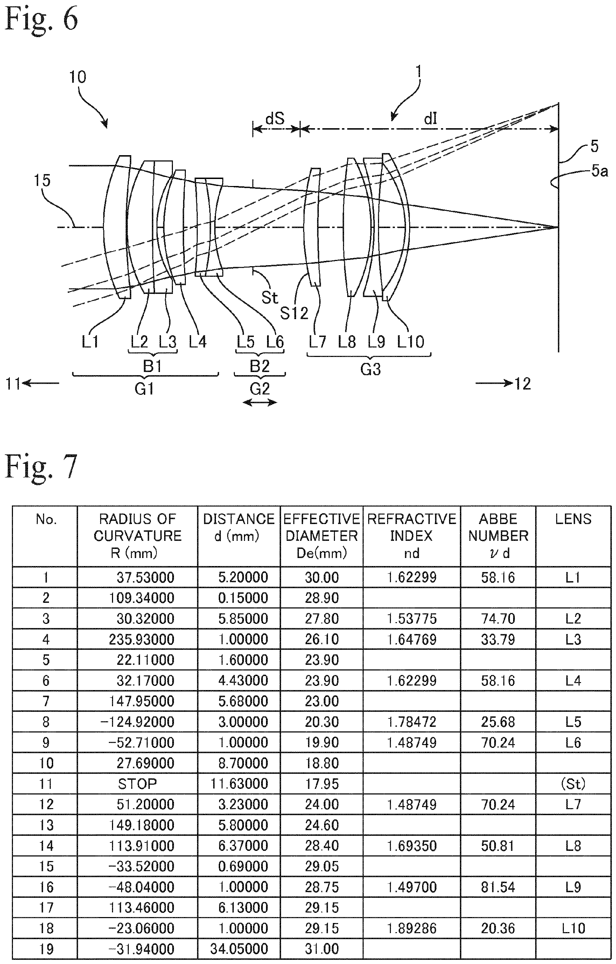

FIG. 6 depicts an example of a camera 1 equipped with a different optical system 10 for image capture. This optical system 10 includes, in order from the object side 11 to the image plane 5a, a first lens group G1 that has overall positive refractive power, a second lens group G2 that has overall negative refractive power, an aperture stop St, and a third lens group G3 that has overall positive refractive power, and is an inner focus-type image capture optical system 10 where the second lens group G2 moves during focusing. The first lens group G1 consists of four lenses, the second lens group G2 consists of two lenses, and the third lens group G3 consists of four lenses. Since the basic lens configurations of the respective groups are the same as the optical system described above, description is omitted here, but the present optical system as a whole consists of ten lenses including two cemented lenses B1 and B2.

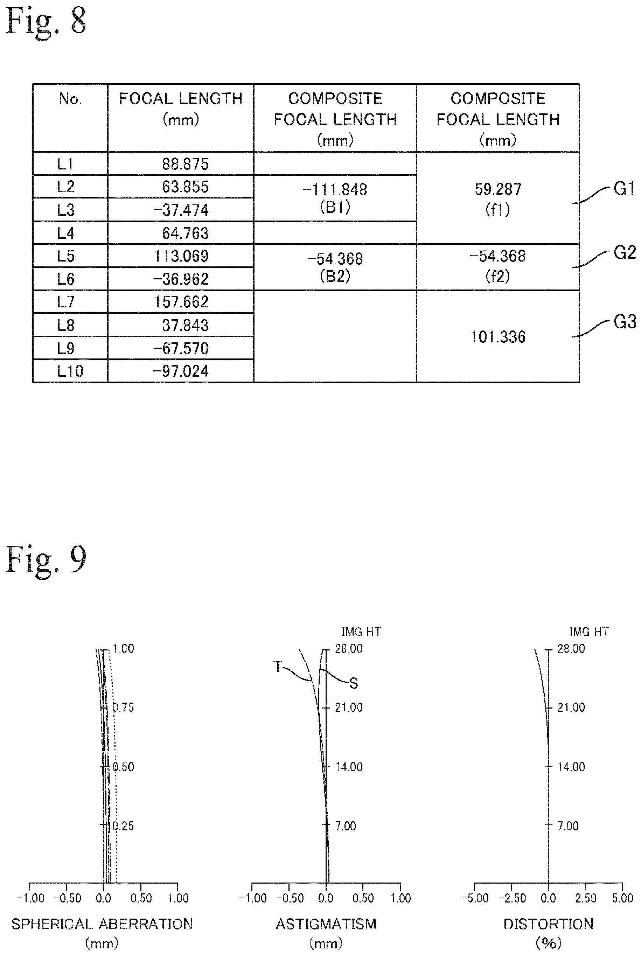

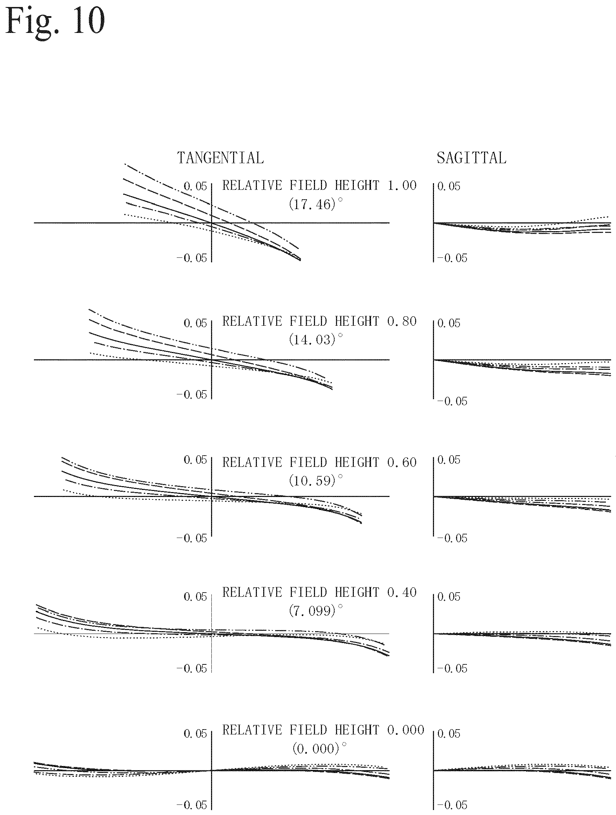

FIG. 7 depicts data on the respective lenses that construct the optical system 10. FIG. 8 depicts the focal length (in mm) of each lens and the composite focal lengths (in mm) of each lens group based on d-line. FIG. 9 depicts spherical aberration, astigmatism, and distortion of the optical system 10, and in FIG. 10, chromatic aberrations of magnification (transverse aberrations) of the optical system 10 are separately depicted for tangential rays and sagittal rays at the respective wavelengths given above.

Numerical values indicating the main performance of the optical system 10 are given below.

Overall composite focal length (f): 95.19 mm
F number: 3.4
Maximum field angle (half field angle): 16.55 degrees
Image circle: $\varphi$56 mm
Back focus (BF): 34.05 mm
Overall lens length (LA): 72.46 mm

The values of the optical system 10 for the conditions (1) to (9) are given below, with all of the conditions being satisfied. Note that the values in quotation marks indicate the parameters corresponding to the optical system 10 in the present embodiment.

Condition (1) (dS/dI, "d11/(d12 to d19)"): 0.200
Condition (2) (|f2/fs|, "|f2/fL7|"): 0.345
Condition (3) (f2/BF): -1.60
Condition (4) (f2/f1): -0.917
Condition (5) (BF/RLN2, "BF/R17"): 0.300
Condition (6) ((RLL1+RLN2)/(RLL1-RLN2), "(R18+R17)/(R18-R17)"): -0.662
Condition (7) (De1/DeLL2, "De1/De19"): 0.97

Condition (8) (LA/BF): 2.13
Condition (9) (De1/BF): 0.88

In this way, the optical system (lens system) 10 disclosed above relates to image capture optical apparatuses and digital appliances and is a wide-aperture, compact optical system 10 that is suited to an interchangeable lens digital camera, a video camera, a TV camera, an action camera, or the like that captures images of scenery and/or a subject using an image capture element. In particular, it is possible to provide an optical system 10 that is suited to a lens system with a large image circle for use with a large image capture element 5, that functions as a telephoto lens in spite of having a simple configuration with ten lenses in three groups, also has a small lens diameter and short overall lens length LA while having a long back focus BF, and is wide-angle, bright and has favorable aberration correction.

**Claims**

1. An optical system consisting of, in order from an object side toward an image plane, a first lens group with overall positive refractive power, a second lens group with overall negative refractive power, an aperture stop, and a third lens group with overall positive refractive power,
   wherein the third lens group includes a stop-side lens with positive refractive power that is disposed closest to the object side and an image plane-side lens with negative refractive power that is disposed closest to an image plane side, and
   a distance dS between a surface of the object side of the stop-side lens and the aperture stop and a distance dI between the surface on the object side of the stop-side lens and the image plane satisfy a condition below.

$$0.02 < dS/dI < 0.3$$

2. The optical system according to claim 1,
   wherein during focusing, the first lens group, the aperture stop, and the third lens group are fixed with respect to the image plane and the second lens group moves relative to the image plane.

3. The optical system according to either claim 1 or 2,
   wherein a composite focal length f2 of the second lens group and a focal length fs of the stop-side lens satisfy a condition below.

$$0.1 < |f2/fs| < 0.8$$

4. The optical system according to any one of claims 1 to 3,
   wherein a focal length f1 of the first lens group, a focal length f2 of the second lens group, and a back focus BF satisfy conditions below.

$$-10 < f2/BF < -1.4$$

$$-1.5 < f2/f1 < -0.7$$

5. The optical system according to any one of claims 1 to 4,
   wherein the third lens group consists of the stop-side lens, a lens with positive refractive power, a biconcave negative lens, and the image plane-side lens disposed in order from the object side, and a radius of curvature RLN2 of a surface on the image plane side of the biconcave negative lens and a back focus BF satisfy a condition below.

$$0.05 < BF/RLN2 < 0.5$$

6. The optical system according to claim 5,
   wherein the image plane-side lens is a negative meniscus lens that is convex on the image plane side, and a radius of curvature RLL1 of a surface on the object side of the image plane-side lens and the radius of curvature RLN2 satisfy a condition below.

$$-1.0<(RLL1+RLN2)/(RLL1-RLN2)<-0.1$$

7. The optical system according to any one of claims 1 to 6,
   wherein an effective diameter De1 of a surface of the object side of a lens most toward the object side in the first lens group and an effective diameter DeLL2 of a surface on the image plane side of the image plane-side lens satisfy a condition below.

$$0.9<De1/DeLL2<1.0$$

8. The optical system according to any one of claims 1 to 7,
   wherein an overall length LA and a back focus BF of the optical system satisfy a condition below.

$$1.5<LA/BF<5.0.$$

9. The optical system according to any one of claims 1 to 8,
   wherein an effective diameter De1 of a surface on the object side of a lens most toward the object side in the first lens group and a back focus BF satisfy a condition below.

$$0.8<De1/BF<2.0.$$

10. An image capture apparatus comprising:

    the optical system according to any one of claims 1 to 9; and
    an image capture element disposed on the image plane side of the optical system.

# Fig. 1

# Fig. 2

| No. | RADIUS OF CURVATURE R (mm) | DISTANCE d (mm) | EFFECTIVE DIAMETER De(mm) | REFRACTIVE INDEX nd | ABBE NUMBER $\nu$ d | LENS |
|---|---|---|---|---|---|---|
| 1 | 41.92000 | 4.62000 | 36.00 | 1.62041 | 60.29 | L1 |
| 2 | 114.36000 | 0.15000 | 31.50 | | | |
| 3 | 29.38000 | 6.36000 | 31.60 | 1.49700 | 81.54 | L2 |
| 4 | 1770.42000 | 1.67000 | 28.10 | 1.59270 | 35.31 | L3 |
| 5 | 22.65000 | 4.54000 | 24.80 | | | |
| 6 | 34.66000 | 4.15000 | 24.20 | 1.62299 | 58.16 | L4 |
| 7 | 218.39000 | 0.96515 | 23.30 | | | |
| 8 | −125.96000 | 3.61000 | 21.50 | 1.75520 | 27.51 | L5 |
| 9 | −50.95000 | 0.43000 | 20.70 | 1.48749 | 70.24 | L6 |
| 10 | 28.99000 | 6.42183 | 19.60 | | | |
| 11 | STOP | 12.23000 | 18.30 | | | (St) |
| 12 | 39.69000 | 3.31000 | 22.00 | 1.51633 | 64.14 | L7 |
| 13 | 75.60000 | 8.22000 | 25.60 | | | |
| 14 | 76.53000 | 7.14000 | 31.40 | 1.64850 | 53.02 | L8 |
| 15 | −41.45000 | 0.15000 | 31.90 | | | |
| 16 | −74.07000 | 1.00000 | 31.60 | 1.52249 | 59.83 | L9 |
| 17 | 234.83000 | 11.89000 | 31.70 | | | |
| 18 | −26.23000 | 3.43000 | 32.30 | 1.85896 | 22.73 | L10 |
| 19 | −51.39000 | 24.02000 | 36.40 | | | |

# Fig. 3

| No. | FOCAL LENGTH (mm) | COMPOSITE FOCAL LENGTH (mm) | COMPOSITE FOCAL LENGTH (mm) | |
|---|---|---|---|---|
| L1 | 103.71 | | | |
| L2 | 59.864 | −143.679 (B1) | 60.21 (f1) | G1 |
| L3 | −38.466 | | | |
| L4 | 65.293 | | | |
| L5 | 110.039 | −56.443 (B2) | −56.443 (f2) | G2 |
| L6 | −37.707 | | | |
| L7 | 156.312 | | | |
| L8 | 42.285 | | 99.997 | G3 |
| L9 | −107.223 | | | |
| L10 | −65.909 | | | |

# Fig. 4

SPHERICAL ABERRATION (mm)

ASTIGMATISM (mm)

DISTORTION (%)

# Fig. 5

TANGENTIAL                                    SAGITTAL

RELATIVE FIELD HEIGHT 1.00
(17.46)°

RELATIVE FIELD HEIGHT 0.80
(14.03)°

RELATIVE FIELD HEIGHT 0.60
(10.59)°

RELATIVE FIELD HEIGHT 0.40
(7.099)°

RELATIVE FIELD HEIGHT 0.00
(0.000)°

# Fig. 6

# Fig. 7

| No. | RADIUS OF CURVATURE R (mm) | DISTANCE d (mm) | EFFECTIVE DIAMETER De(mm) | REFRACTIVE INDEX nd | ABBE NUMBER $\nu$ d | LENS |
|---|---|---|---|---|---|---|
| 1 | 37.53000 | 5.20000 | 30.00 | 1.62299 | 58.16 | L1 |
| 2 | 109.34000 | 0.15000 | 28.90 | | | |
| 3 | 30.32000 | 5.85000 | 27.80 | 1.53775 | 74.70 | L2 |
| 4 | 235.93000 | 1.00000 | 26.10 | 1.64769 | 33.79 | L3 |
| 5 | 22.11000 | 1.60000 | 23.90 | | | |
| 6 | 32.17000 | 4.43000 | 23.90 | 1.62299 | 58.16 | L4 |
| 7 | 147.95000 | 5.68000 | 23.00 | | | |
| 8 | -124.92000 | 3.00000 | 20.30 | 1.78472 | 25.68 | L5 |
| 9 | -52.71000 | 1.00000 | 19.90 | 1.48749 | 70.24 | L6 |
| 10 | 27.69000 | 8.70000 | 18.80 | | | |
| 11 | STOP | 11.63000 | 17.95 | | | (St) |
| 12 | 51.20000 | 3.23000 | 24.00 | 1.48749 | 70.24 | L7 |
| 13 | 149.18000 | 5.80000 | 24.60 | | | |
| 14 | 113.91000 | 6.37000 | 28.40 | 1.69350 | 50.81 | L8 |
| 15 | -33.52000 | 0.69000 | 29.05 | | | |
| 16 | -48.04000 | 1.00000 | 28.75 | 1.49700 | 81.54 | L9 |
| 17 | 113.46000 | 6.13000 | 29.15 | | | |
| 18 | -23.06000 | 1.00000 | 29.15 | 1.89286 | 20.36 | L10 |
| 19 | -31.94000 | 34.05000 | 31.00 | | | |

# Fig. 8

| No. | FOCAL LENGTH (mm) | COMPOSITE FOCAL LENGTH (mm) | COMPOSITE FOCAL LENGTH (mm) | |
|---|---|---|---|---|
| L1 | 88.875 | | | |
| L2 | 63.855 | −111.848 (B1) | 59.287 (f1) | G1 |
| L3 | −37.474 | | | |
| L4 | 64.763 | | | |
| L5 | 113.069 | −54.368 (B2) | −54.368 (f2) | G2 |
| L6 | −36.962 | | | |
| L7 | 157.662 | | | |
| L8 | 37.843 | | 101.336 | G3 |
| L9 | −67.570 | | | |
| L10 | −97.024 | | | |

# Fig. 9

SPHERICAL ABERRATION (mm)

ASTIGMATISM (mm)

DISTORTION (%)

# Fig. 10

TANGENTIAL                                    SAGITTAL

RELATIVE FIELD HEIGHT 1.00
(17.46)°

RELATIVE FIELD HEIGHT 0.80
(14.03)°

RELATIVE FIELD HEIGHT 0.60
(10.59)°

RELATIVE FIELD HEIGHT 0.40
(7.099)°

RELATIVE FIELD HEIGHT 0.000
(0.000)°

## INTERNATIONAL SEARCH REPORT

| International application No. |
| --- |
| PCT/JP2017/022756 |

| A. CLASSIFICATION OF SUBJECT MATTER |
| --- |
| *G02B13/02*(2006.01)i |

According to International Patent Classification (IPC) or to both national classification and IPC

| B. FIELDS SEARCHED |
| --- |

Minimum documentation searched (classification system followed by classification symbols)
G02B13/02

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>A | JP 2015-215557 A   (Nikon Corp.),<br>03 December 2015 (03.12.2015),<br>1st to 4th examples<br>& WO 2015/174230 A1 | 1-3,9,10<br>4-8 |
| X<br>A | JP 2015-68910 A   (Sony Corp.),<br>13 April 2015 (13.04.2015),<br>examples 8 to 10<br>& US 2015/0092100 A1<br>examples 8 to 10 | 1,2,4,7,8,10<br>3,5,6,9 |
| X<br>A | JP 2014-211498 A   (Nikon Corp.),<br>13 November 2014 (13.11.2014),<br>3rd example<br>(Family: none) | 1-4,8-10<br>5-7 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 September 2017 (01.09.17) | 12 September 2017 (12.09.17) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2017/022756

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2014/118865 A1 (Panasonic Corp.),<br>07 August 2014 (07.08.2014),<br>entire text; all drawings<br>& US 2015/0312454 A1<br>entire text; all drawings<br>& CN 104969109 A | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002107616 A